# EUROPÄISCHE PATENTSCHRIFT

(11) **EP 1 812 735 B1**
(45) Veröffentlichungstag und Bekanntmachung des Hinweises auf die Patenterteilung: **08.07.2009**
(21) Anmeldenummer: 05819243.6
(22) Anmeldetag: 10.11.2005
(51) Int. Cl.: F16H 61/04

(54) **VERFAHREN ZUM BETRIEB EINES ANTRIEBSSTRANGS EINES KRAFTFAHRZEUGS**
METHOD FOR OPERATING A DRIVE TRAIN OF A MOTOR VEHICLE
PROCEDE POUR FAIRE FONCTIONNER UNE CHAINE CINEMATIQUE D'UN VEHICULE AUTOMOBILE

(30) Priorität: 19.11.2004 DE 102004055857
(43) Veröffentlichungstag der Anmeldung: 01.08.2007
(73) Patentinhaber: Daimler AG, 70327 Stuttgart (DE)
(72) Erfinder: SCHNITZER, Detlef, 73770 Denkendorf (DE)
(74) Vertreter: JENSEN & SON
(86) Internationale Anmeldenummer: PCT/EP2005/012015
(87) Internationale Veröffentlichungsnummer: WO 2006/053670

(56) Entgegenhaltungen:
- EP-A- 0 676 566
- WO-A-02/092378
- WO-A-03/036137
- WO-A-20/04037590

## Beschreibung

Die Erfindung betrifft ein Verfahren zum Betrieb eines Antriebsstrangs eines Kraftfahrzeugs nach dem Oberbegriff des Anspruchs 1.

Die gattungsbildende EP 0 676 566 A1 beschreibt ein Verfahren zum Betrieb eines Kraftfahrzeugs mit einer Antriebsmaschine, einem fremdkraftbetätigten Getriebe, welches ein unsynchronisiertes Hauptgetriebe und eine synchronisierte Nachschaltgruppe aufweist. Zwischen der Antriebsmaschine und dem Getriebe ist eine fremdkraftbetätigte Kupplung angeordnet. Die bei einer Schaltung von einem Ursprungsgang in einen Zielgang im Hauptgetriebe notwendige Anpassung der Drehzahl einer Getriebeeingangswelle, die so genannte Synchronisation auf eine Synchrondrehzahl des Zielgangs erfolgt mittels der Antriebsmaschine. Die Synchrondrehzahl des Zielgangs ist dabei die Drehzahl der Getriebeeingangswelle, die sich bei der aktuellen Geschwindigkeit des Kraftfahrzeugs und eingelegtem Zielgang einstellt.

Die Synchronisation kann nicht sicher durchgeführt werden, wenn die Antriebsmaschine nicht voll funktionsfähig ist, sich also in einem Notbetrieb befindet. Da das Hauptgetriebe als unsynchronisiertes Getriebe ausgeführt ist, besteht die Gefahr, dass der Ursprungsgang ausgelegt ist, der Zielgang aber nicht eingelegt werden kann. Damit besteht keine Antriebsverbindung zwischen der Antriebsmaschine und angetriebenen Fahrzeugrädern. Die Antriebsmaschine kann damit weder zum Beschleunigen noch zum Verzögern des Kraftfahrzeugs genutzt werden.

Demgegenüber ist es die Aufgabe der Erfindung, ein Verfahren zum Betrieb eines Antriebsstrangs vorzuschlagen, mittels welchem ein Einlegen des Zielgangs sichergestellt werden kann. Erfindungsgemäß wird die Aufgabe durch ein Verfahren gemäß Anspruch 1 gelöst.

Bei Erkennen eines Notbetriebs der Antriebsmaschine durch die Steuerungseinrichtung wird zuerst die Kupplung geöffnet und damit die Antriebsmaschine vom Getriebe getrennt. Anschließend wird die Nachschaltgruppe in eine Neutralstellung gebracht, in der die Antriebsverbindung zwischen dem Getriebe und den angetriebenen Fahrzeugrädern unterbrochen ist. Die Nachschaltgruppe weist zumindest zwei Fahrstellungen mit unterschiedlichen Übersetzungen auf, in denen sie Drehmoment überträgt. Sie kann beispielsweise als eine so genannte Range- oder Splitgruppe ausgeführt sein. Damit ist das als Zahnräderwechselgetriebe ausgeführte Hauptgetriebe sowohl vom Antrieb als auch vom Abtrieb getrennt und es kann weder am Antrieb noch am Abtrieb ein Drehmoment abgestützt werden. In einem nächsten Schritt wird der Zielgang durch die Ansteuerung geeigneter Aktoren im Hauptgetriebe eingelegt.

Wenn das Hauptgetriebe mit dem Antrieb und dem Abtrieb verbunden ist, kann der Zielgang nur eingelegt werden, wenn zwischen dem Schaltelement, beispielsweise einer Schiebemuffe, und einem Losrad des Zielgangs keine oder nur eine geringe Drehzahldifferenz vorhanden ist. Bei einer zu hohen Drehzahldifferenz kann die formschlüssige Verbindung zwischen dem Schaltelement und dem Losrad nicht hergestellt werden.

Nach dem Auftrennen der Verbindungen zum Antrieb und zum Abtrieb müssen bei der Drehzahlangleichung von Schaltelement und Losrad keine großen Drehmassen mehr beschleunigt werden, so dass die Drehzahlangleichung und das anschließende Einlegen des Zielgangs auch ohne zusätzliche Synchronisiereinrichtungen möglich ist. Nach dem Einlegen des Zielgangs wird in der Nachschaltgruppe wieder eine Fahrstellung eingestellt, also die Verbindung zum Abtrieb hergestellt und die Kupplung zumindest teilweise geschlossen. Die Einstellung der Fahrstellung in der Nachschaltgruppe erfolgt insbesondere vor dem Schließen der Kupplung. Sie kann aber auch nach dem Schließen der Kupplung erfolgen.

Damit ist sichergestellt, dass auch in einem Notbetrieb der Antriebsmaschine der Zielgang im Hauptgetriebe eingelegt werden kann. Die Antriebsmaschine kann somit zum Beschleunigen und Verzögern des Kraftfahrzeugs verwendet werden. Sicherheitskritische Situationen, in denen das Fahrzeug nur noch antriebslos rollen kann, können damit verhindert werden.

Getriebe mit Nachschaltgruppen werden insbesondere in Nutzfahrzeugen verwendet. Bei Nutzfahrzeugen sind sehr hohe Lenkkräfte notwendig, so dass ein Nutzfahrzeug ohne eine Lenkunterstützung nur sehr schwer zu beherrschen ist. Falls die Antriebsmaschine keine Drehzahl mehr aufweist, wird eine von der Antriebsmaschine angetriebene, für die Lenkunterstützung notwendige Lenkhelfpumpe nicht mehr angetrieben. Durch das erfindungsgemäße Verfahren kann sichergestellt werden, dass solange das Kraftfahrzeug fährt, die Antriebsmaschine geschleppt wird und so die Lenkhelfpumpe noch arbeiten kann. Dies ermöglicht auch bei einem Ausfall der Antriebsmaschine einen sicheren Betrieb des Kraftfahrzeugs. Könnte der Betrieb der Lenkhelfpumpe nicht sichergestellt werden, so müsste eine weitere Lenkhelfpumpe vorgesehen werden, die zumindest mittelbar über die Fahrzeugräder angetrieben werden müsste. Dies würde zusätzliche Kosten verursachen und Bauraum beanspruchen.

Die Steuerungseinrichtung kann einen Notbetrieb der Antriebsmaschine beispielsweise erkennen, wenn ein Aktor oder ein Sensor der Antriebsmaschine einen Fehler meldet. Ein Notbetrieb kann auch erkannt werden, wenn die Antriebsmaschine auf Anforderungen, beispielsweise zur Änderung eines abgegebenen Drehmoments nicht richtig reagiert oder eine Signalverbindung zwischen Steuerungseinrichtung und Antriebsmaschine unterbrochen ist.

Die Steuerungseinrichtung kann die Antriebsmaschine, das Getriebe und/oder die Kupplung auch indirekt ansteuern, indem die Steuerungseinrichtung mit einer weiteren Steuerungseinrichtung in Signalverbindung steht und dieser Sollvorgaben sendet, welche die weitere Steuerungseinrichtung dann an der Antriebsmaschine, dem Getriebe und/oder der Kupplung umsetzt.

In Ausgestaltung der Erfindung bestimmt die Steuerungseinrichtung in Abhängigkeit von einer Geschwindigkeit des Kraftfahrzeugs den Zielgang im Hauptgetriebe und die einzustellende Fahrstellung in der Nachschaltgruppe. Die Geschwindigkeit des Kraftfahrzeugs kann die Steuerungseinrichtung selbst bestimmen, beispielsweise aus der Drehzahl am Ausgang des Getriebes. Alternativ dazu kann die Geschwindigkeit von einer weiteren Steuerungseinrichtung des Kraftfahrzeugs bestimmt und der Steuerungseinrichtung des Antriebsstrangs übermittelt werden.

Der eingelegte Gang im Hauptgetriebe und die eingestellte Fahrstellung in der Nachschaltgruppe bestimmen die Gesamtübersetzung des Getriebes. Bei gegebener Geschwindigkeit des Kraftfahrzeugs kann durch die Wahl der Übersetzung des Getriebes die Drehzahl der Getriebeeingangswelle vorgegeben werden. Wenn sich die Drehzahl der Ahtriebsmaschine noch ändern lässt, beispielsweise wenn die Antriebsmaschine vollkommen außer Betrieb ist, kann so auch die Drehzahl der Antriebsmaschine festgelegt werden. Falls die Antriebsmaschine auf eine feste Drehzahl eingestellt ist, kann damit die Differenzdrehzahl an der Kupplung auf einen minimalen Wert eingestellt werden. Damit ist es möglich, die Drehzahl der Getriebeeingangswelle auf einen für die aktuelle Situation optimalen Wert einzustellen.

In Ausgestaltung der Erfindung bestimmt die Steuerungseinrichtung in Abhängigkeit von Eigenschaften der Fahrbahn den Zielgang im Hauptgetriebe und die einzustellende Fahrstellung in der Nachschaltgruppe. Eigenschaften der Fahrbahn können beispielsweise eine Steigung oder eine Krümmung einer Kurve der Fahrbahn sein. Die Eigenschaften können entweder mittels geeigneter Sensoren, wie beispielsweise Neigungssensoren, Längs- oder Querbeschleunigungssensoren oder einem Lenkwinkelsensor gemessen oder unter Verwendung von Betriebsgrößen des Kraftfahrzeugs, wie beispielsweise Beschleunigung, abgegebenes Drehmoment der Antriebsmaschine und Übersetzung des Getriebes, mit dem Fachmann bekannten Verfahren geschätzt werden. Es können auch Eigenschaften der vor dem Kraftfahrzeug liegenden Fahrbahn berücksichtigt werden. Diese Eigenschaften können beispielsweise aus einer mitgeführten digitalen Straßenkarte ausgelesen oder mittels einer Kamera erfasst werden.

Damit kann die optimale Übersetzung des Getriebes für die aktuelle Fahrsituation bestimmt werden. Beispielsweise kann bei einem erkannten Gefälle eine kürzere Übersetzung und damit eine höhere Drehzahl der Getriebeeingangswelle eingestellt werden, um so eine höhere Bremswirkung der Antriebsmaschine zu erreichen. Ebenso würde vor einer Kurve oder vor einer Steigung eine kürzere Übersetzung eingestellt, um so eine ausreichende Leistung der Antriebsmaschine zu ermöglichen.

In Ausgestaltung der Erfindung stellt die Steuerungseinrichtung in Phasen, in welchen keine Antriebsleistung der Antriebsmaschine notwendig ist, im Hauptgetriebe eine Neutralstellung ein und unterbricht damit die Antriebsverbindung zwischen der Antriebsmaschine und angetriebenen Fahrzeugrädern. Damit kann das Kraftfahrzeug in diesen Situationen ohne Bremswirkung durch die Antriebsmaschine rollen. Die Phasen können beispielsweise erkannt werden, wenn ein Solldrehmoment für die Antriebsmaschine, welches vom Fahrzeugführer mittels eines Fahrpedals oder einer Bedieneinrichtung für eine Motorbremse vorgegeben wird, innerhalb eines Bereichs um Null liegt. Bei Verwendung einer solchen Funktion liegen zwischen dem Auslegen des Ursprungsgangs und dem Einlegen des Zielgangs Zeitabschnitte, welche mehrere Sekunden dauern können. Die Gefahr, dass in diesen Zeitabschnitten die Antriebsmaschine in einen Notbetrieb kommt, ist deshalb im Vergleich mit Schaltungen, die kontinuierlich durchgeführt werden, sehr hoch. Es ist daher besonders wichtig, dass bei der Verwendung einer solchen Funktion das Einlegen des Zielgangs sichergestellt werden kann.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:
- Fig. 1: einen Antriebsstrang eines Kraftfahrzeugs und
- Fig. 2: ein Ablaufdiagramm einer Schaltung im Hauptgetriebe.

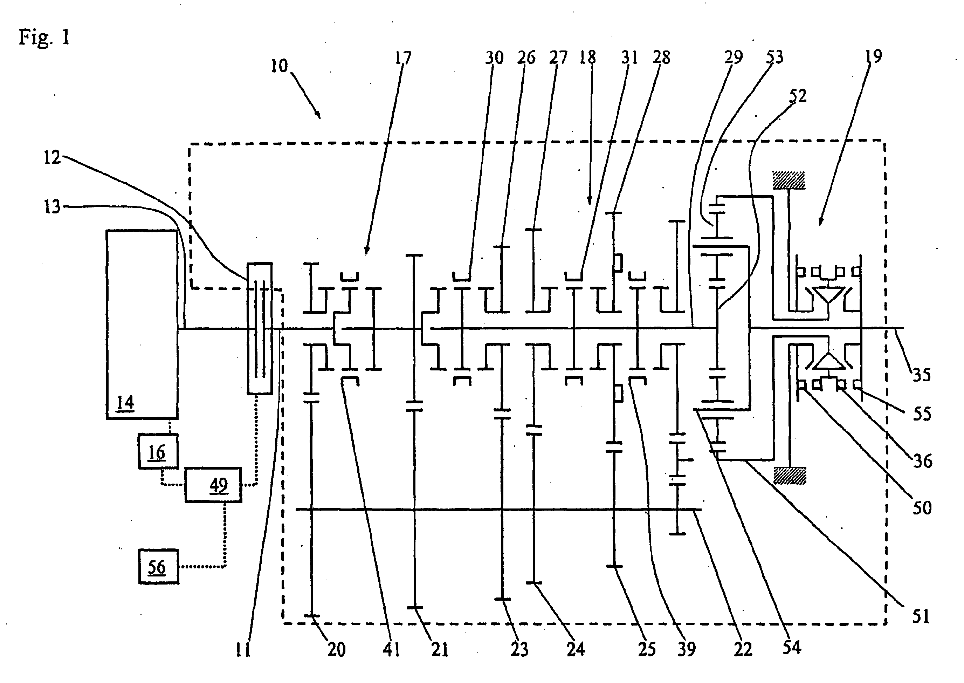

Gemäß Fig.1 verfügt ein Getriebe 10 über eine Getriebeeingangswelle 11, welche über eine fremdkraftbetätigte Kupplung 12 mit einer koaxial zur Getriebeeingangswelle 11 angeordneten Ausgangswelle 13 einer Antriebsmaschine 14 koppelbar ist. Die Kupplung 12 kann mittels eines nicht dargestellten Stellglieds, welches von einer Steuerungseinrichtung 49 angesteuert wird, geöffnet und geschlossen werden. Die Antriebsmaschine 14 wird von einer Steuerungseinrichtung 16 angesteuert. Mittels der Ansteuerung sind eine Drehzahl und ein abgegebenes Drehmoment der Antriebsmaschine 14 einstellbar. Die Steuerungseinrichtung 49 kann Sollvorgaben für die Drehzahl und das abgegebene Drehmoment der Antriebsmaschine 14 an die Steuerungseinrichtung 16 senden, welche diese dann umsetzt. Die Steuerungseinrichtung 49 steuert die Antriebsmaschine 14 damit an. Die Steuerungseinrichtung 49 steht außerdem mit einer Bedieneinheit 56 in Signalverbindung, mittels welcher ein Fahrzeugführer Schaltungen im Getriebe 10 auslösen kann.

Das Getriebe 10 ist als ein so genanntes Drei-Gruppengetriebe ausgeführt. Drehfest verbunden mit der Getriebeeingangswelle 11 ist eine Vorschaltgruppe in Form einer Splitgruppe 17 angeordnet. Der Splitgruppe 17 nachgeordnet ist ein Hauptgetriebe 18, an welches sich eine Nachschaltgruppe in Form einer Rangegruppe 19 anschließt. Das Hauptgetriebe 18 ist als ein unsynchronisiertes Zahnräderwechselgetriebe ausgeführt. Es verfügt also nicht über Synchroneinrichtungen für jeden Gang.

Mittels der Splitgruppe 17 kann die Getriebeeingangswelle 11 über zwei verschiedene Zahnradpaarungen 20, 21 mit einer parallel zur Getriebeeingangswelle 11 angeordneten Vorgelegewelle 22 in Wirkverbindung gebracht werden. Die Zahnradpaarungen 20, 21 weisen eine unterschiedliche Übersetzung auf. Auf der Vorgelegewelle 22 sind verdrehfest Festräder 23, 24, 25 für den 3., 2. und 1. Gang des Hauptgetriebes 18 angeordnet. Die Festräder 23, 24, 25 kämmen jeweils mit zugehörigen Losrädern 26, 27, 28, welche drehbar auf einer koaxial zur Getriebeeingangswelle 11 angeordneten Hauptwelle 29 angeordnet sind. Das Losrad 26 kann mittels einer Schiebemuffe 30, die Losräder 27 und 28 mittels einer Schiebemuffe 31 verdrehfest mit der Hauptwelle 29 verbunden werden. Ein 4. Gang des Hauptgetriebes wird realisiert, indem die Hauptwelle 29 mittels der Schiebemuffe 30 mit der Splitgruppe 17 verdrehfest verbunden wird. Das Verbinden der Losräder 26, 27, 28 und der Splitgruppe 17 mit der Hauptwelle 29 ist nur möglich, wenn die Drehzahlen der zu verbindenden Elemente annähernd gleich sind. Die Drehzahlangleichung wird in einem Normalbetrieb der Antriebsmaschine 14 mittels der Antriebsmaschine 14 durchgeführt.

Dem Hauptgetriebe 18 nachgeordnet ist die Rangegruppe 19, welche in Planetenbauart ausgeführt ist. Mit der Rangegruppe 19 sind zwei verschiedene Übersetzungen darstellbar. Das Getriebe 10 verfügt damit über insgesamt 16 Gänge.

Mittels einer Bremse 50 kann in einer ersten Fahrstellung der Rangegruppe 19 ein Hohlrad 51 gegen ein nicht dargestelltes Gehäuse festgehalten werden, so dass über ein Sonnenrad 52, welches mit der Hauptwelle 29 verbunden ist, und Planetenräder 53 ein Steg 54 angetrieben wird. Der Steg 54 ist mit einer Getriebeausgangswelle 35 verbunden. In einer zweiten Fahrstellung kann mittels einer Getriebekupplung 55 das Hohlrad 51 mit dem Steg 54 verbunden werden, so dass die Sonne 52, der Steg 54 und das Hohlrad 51 im Block umlaufen. Die Bremse 50 und die Getriebekupplung 55 können von einer Schiebemuffe 36 betätigt werden und wirken so als Synchronisierungen der Rangegruppe 19. Ist weder die Bremse 50 noch die Getriebekupplung 55 betätigt, besteht keine Antriebsverbindung zwischen der Hauptwelle 29 und der Getriebeausgangswelle 35. Die Rangegruppe 19 ist dann in einer Neutralstellung.

Von der koaxial zur Hauptwelle 29 angeordneten Getriebeausgangswelle 35 wird das gewandelte Drehmoment und die Drehzahl der Antriebsmaschine 14 mittels einer Antriebswelle an ein Achsgetriebe übertragen, welches in an sich bekannter Weise das Drehmoment über zwei Abtriebswellen an nicht dargestellte angetriebene Fahrzeugräder überträgt.

Die Schiebemuffen 30, 31, 36, 39, und 41 können von nicht dargestellten Stellgliedern, welche von der Steuerungseinrichtung 49 angesteuert werden, betätigt und damit die verschiedenen Gänge aus- und eingelegt werden. Wenn die Schiebemuffen 30, 31 und 39 des Hauptgetriebes 18 mit keinem Losrad verdrehfest verbunden sind, befindet sich das Hauptgetriebe 18 in einer Neutralstellung. Es besteht damit keine Antriebsverbindung zwischen der Getriebeeingangswelle 11 und der Getriebeausgangswelle 35.

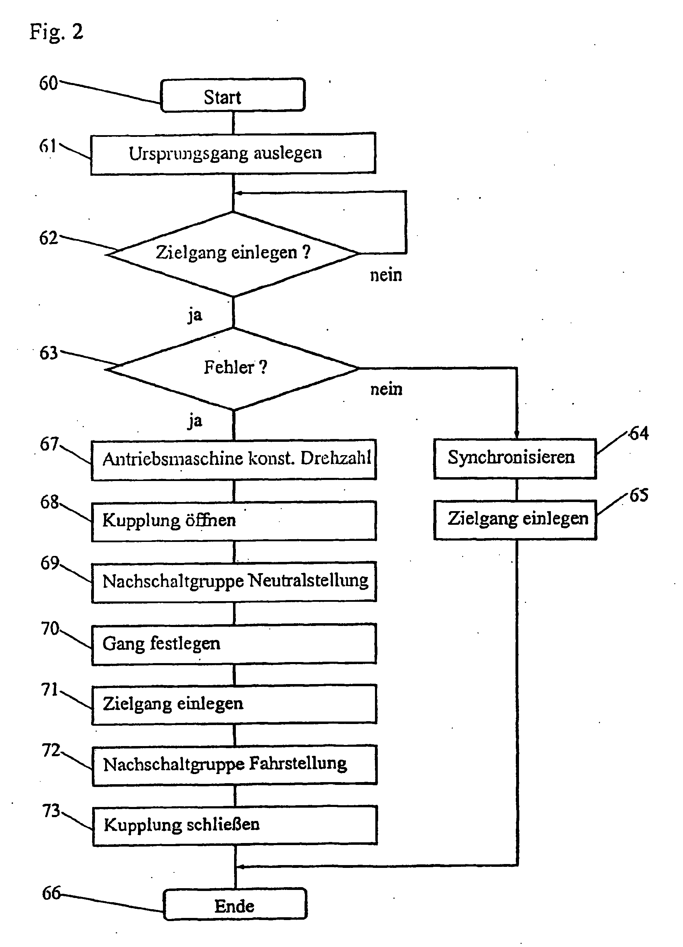

In Fig. 2 ist der Ablauf einer Schaltung im Hauptgetriebe 18 dargestellt. Die Schaltung startet im Block 60. Die Schaltung kann entweder durch den Fahrzeugführer oder durch die Steuerungseinrichtung 49 ausgelöst werden. Die Steuerungseinrichtung 49 kann beispielsweise eine Schaltung auslösen, wenn Drehzahlgrenzen für die Antriebsmaschine 14 über- oder unterschritten werden. Sie kann auch eine Schaltung auslösen, wenn ein Solldrehmoment für die Antriebsmaschine 14 innerhalb eines Bereichs um Null liegt.

Im Block 61 wird der Ursprungsgang ausgelegt, indem die Verbindung des Losrades des Ursprungsgangs mit der zugehörigen Schiebemuffe aufgetrennt wird. Nach dem Auslegen des Ursprungsgangs befindet sich das Hauptgetriebe 18 in der Neutralstellung.

Im Abfrageblock 62 wird geprüft, ob der Zielgang eingelegt werden soll. Diese Abfrage ist dann relevant, wenn der Ursprungsgang auf Grund eines geringen Solldrehmoments für die Antriebsmaschine 14 ausgelegt wurde. Ist dies der Fall, so wird geprüft, ob das Solldrehmoment jetzt außerhalb eines festlegbaren Bereichs liegt. Ist dies nicht der Fall, soll die Neutralstellung noch beibehalten werden und der Abfrageblock 62 wird wiederholt. In allen anderen Fällen wird die Bearbeitung im Abfrageblock 63 fortgesetzt.

Im Abfrageblock 63 wird geprüft, ob ein Notbetrieb der Antriebsmaschine 14 vorliegt. Dabei wird beispielsweise geprüft, ob ein Sensor oder ein Stellglied der Antriebsmaschine 14 eine Fehlfunktion aufweist. Ferner wird geprüft, ob die Signalverbindung zwischen den Steuerungseinrichtungen 49 und 16 und zwischen der Steuerungseinrichtung 16 und der Antriebsmaschine 14 einwandfrei funktioniert.

Liegt kein Fehler vor, so wird im Block 64 die Antriebsmaschine 14 so angesteuert, dass sich die Drehzahl der Getriebeeingangswelle 11 auf die Synchrondrehzahl des Zielgangs einstellt. Anschließend wird im Block 65 der Zielgang eingelegt und die Schaltung ist im Block 66 beendet.

Falls ein Fehler erkannt wird, sich die Antriebsmaschine 14 also in einem Notbetrieb befindet, wird im Block 67 die Antriebsmaschine 14 so angesteuert, dass sich eine konstante Drehzahl einstellt. Die Drehzahl liegt in einem Bereich von 1150 - 1250 U/min, beträgt also beispielsweise 1200 U/min.

Im darauf folgenden Block 68 wird die Kupplung 12 geöffnet. Anschließend wird im Block 69 die Rangegruppe 19 in die Neutralstellung gebracht.

Im folgenden Block 70 wird der einzulegende Zielgang im Hauptgetriebe 18 und die einzustellenden Fahrstellungen der Splitgruppe 17 und der Rangegruppe 19 bestimmt. Dazu sind in der Steuerungseinrichtung 49 die Gesamtübersetzungen aller 16 Gänge des Getriebes 10 gespeichert. Mit der Drehzahl der Getriebeausgangswelle 35, welche sich aus der Geschwindigkeit des Kraftfahrzeugs ergibt, berechnet die Steuerungseinrichtung 49 die Drehzahlen, welche sich in den einzelnen Gängen ergeben würden. In der Steuerungseinrichtung 49 ist außerdem ein Drehzahlbereich abgespeichert, in dem sich die Drehzahl der Getriebeeingangswelle 11 nach der Schaltung liegen sollte. Dieser Bereich kann von der Geschwindigkeit des Kraftfahrzeugs oder der Art des Fehlers der Antriebsmaschine 14 abhängig sein. Die Steuerungseinrichtung 49 prüft nun, mit welchem Gang sich eine Drehzahl innerhalb des Drehzahlbereichs ergeben würde. Die Steuerungseinrichtung 49 wählt einen dieser Gänge aus, womit der Zielgang des Hauptgetriebes 18 und die Fahrstellungen der Splitgruppe 17 und der Rangegruppe 19 festgelegt sind.

Die Auswahl eines der in Frage kommenden Gänge oder auch der Drehzahlbereich können auch von einer Steigung oder einem Gefälle der Fahrbahn abhängig sein. Wird eine Steigung erkannt, so wird beispielsweise der niedrigste der in Frage kommenden Gänge ausgewählt und der Drehzahlbereich wird in Richtung größerer Drehzahlen verschoben.

Nach der Festlegung des Zielgangs im Hauptgetriebe 18 wird dieser im Block 71 eingelegt und gegebenenfalls die Fahrstellung der Splitgruppe 17 gewechselt. Anschließend wird im Block 72 die Fahrstellung der Rangegruppe 19 eingestellt, bevor im Block 73 die Kupplung 12 geschlossen wird.

Die Schaltung endet damit ebenfalls im Block 66.

Alternativ zur beschrieben Bestimmung des Zielgangs und der Fahrstellungen kann auch eine Wunschdrehzahl für die Drehzahl der Getriebeeingangswelle 11 festgelegt und daraus eine Wunschübersetzung des Getriebes 10 berechnet werden. Anschließend wird geprüft, welcher Gang dieser Wunschübersetzung am nächsten liegt. Dieser Gang wird dann ausgewählt. Die Wunschdrehzahl kann ebenso wie der beschriebene Drehzahlbereich variabel sein.

## Patentansprüche

1. Verfahren zum Betrieb eines Antriebsstrangs eines Kraftfahrzeugs mit
- einer Antriebsmaschine (14),
- einem fremdkraftbetätigten Getriebe (10), welches ein unsynchronisiertes Hauptgetriebe (18) und eine synchronisierte Nachschaltgruppe (19) aufweist,
- eine zwischen der Antriebsmaschine (14) und dem Getriebe (10) angeordnete fremdkraftbetätigte Kupplung (12) und
- eine Steuerungseinrichtung (49), welche die Antriebsmaschine (14), das Getriebe (10) und die Kupplung (12) ansteuert,
wobei in einem Normalbetrieb der Antriebsmaschine (14) bei einer Schaltung von einem Ursprungsgang in einen Zielgang im Hauptgetriebe (18) eine Synchronisation einer Getriebeeingangswelle (11) auf eine Synchrondrehzahl des Zielgangs mittels der Antriebsmaschine (14) erfolgt,
**dadurch gekennzeichnet,**
**dass** zum Einlegen des Zielgangs in einem Notbetrieb der Antriebsmaschine (14) folgende Schritte ausgeführt werden:
- Öffnen der Kupplung (12),
- Einstellen einer Neutralstellung in der Nachschaltgruppe (19),
- Einlegen des Zielgangs,
- Einstellen einer Fahrstellung in der Nachschaltgruppe (19) und
- zumindest teilweises Schließen der Kupplung (12).

2. Verfahren nach Anspruch 1,
**dadurch gekennzeichnet,**
**dass** die Steuerungseinrichtung (49) in Abhängigkeit von einer Geschwindigkeit des Kraftfahrzeugs den Zielgang im Hauptgetriebe (18) und die einzustellende Fahrstellung in der Nachschaltgruppe (19) bestimmt.

3. Verfahren nach Anspruch 1 oder 2,
**dadurch gekennzeichnet,**
**dass** die Steuerungseinrichtung (49) in Abhängigkeit von Eigenschaften der Fahrbahn den Zielgang im Hauptgetriebe (18) und die einzustellende Fahrstellung in der Nachschaltgruppe (19) bestimmt.

4. Verfahren nach Anspruch 2 oder 3,
**dadurch gekennzeichnet,**
**dass**
- das Getriebe (10) eine Vorschaltgruppe (17) aufweist,
- die Steuerungseinrichtung (49) in Abhängigkeit von der Geschwindigkeit des Kraftfahrzeugs eine einzustellende Fahrstellung in der Vorschaltgruppe (17) bestimmt und
- die Fahrstellung in der Vorschaltgruppe (17) vor dem Schließen der Kupplung (12) einstellt.

5. Verfahren nach Anspruch 2, 3 oder 4,
**dadurch gekennzeichnet,**
**dass** die Steuerungseinrichtung (49) die einzulegende Fahrstellung der Vorschaltgruppe (17) und/oder den Zielgang im Hauptgetriebe (18) und/oder die einzulegende Fahrstellung in der Nachschaltgruppe (19) so bestimmt, dass bei der aktuellen Geschwindigkeit des Kraftfahrzeugs eine Drehzahl der Getriebeeingangswelle (11) in einem festlegbaren Drehzahlbereich liegt.

6. Verfahren nach einem der vorhergehenden Ansprüche,
**dadurch gekennzeichnet,**
**dass** die Steuerungseinrichtung (49) in Phasen, in welchen keine Antriebsleistung der Antriebsmaschine (14) notwendig ist, im Hauptgetriebe (18) eine Neutralstellung einstellt.

7. Verfahren nach einem der vorhergehenden Ansprüche,
**dadurch gekennzeichnet,**
**dass** im Notbetrieb der Antriebsmaschine (14) eine konstante Drehzahl der Antriebsmaschine (14) eingestellt wird.

8. Verfahren nach Anspruch 7,
**dadurch gekennzeichnet,**
**dass** die Drehzahl zwischen 1150 und 1250 U/min beträgt.

## Claims

1. Method for operating a drivetrain of a motor vehicle, with:
- a drive machine (14),
- an external-force-actuated transmission (10) comprising an unsynchronised main transmission (18) and a synchronised range group (19),
- an external-force-actuated clutch (12) arranged between the drive machine (14) and the transmission (10), and
- a control unit (49), which controls the drive machine (14), the transmission (10) and the clutch (12),
such that during normal operation of the drive machine (14), during a shift from an original gear to a target gear in the main transmission (18) a synchronisation of a transmission input shaft (11) to a synchronous speed of the target gear by means of the drive machine (14) takes place,
**characterised in that**
to engage the target gear during emergency operation of the drive machine (14) the following steps are carried out:
- the clutch (12) is opened,
- a neutral position is set in the range group (19),
- the target gear is engaged,
- a drive position is set in the range group (19), and
- the clutch (12) is closed, at least partially.

2. Method according to Claim 1,
**characterised in that**
the control unit (49) determines the target gear in the main transmission (18) and the drive position to be set in the range group (19) as a function of a speed of the motor vehicle.

3. Method according to Claims 1 or 2,
**characterised in that**
the control unit (49) determines the target gear in the main transmission (18) and the drive position to be set in the range group (19) as a function of the road characteristics.

4. Method according to Claims 2 or 3,
**characterised in that**
- the transmission (10) comprises a splitter unit (17),
- the control unit (49) determines a drive position to be set in the splitter (17) as a function of the speed of the motor vehicle, and
- the drive position is set in the splitter (17) before the clutch (12) is closed.

5. Method according to Claims 2, 3 or 4,
**characterised in that**
the control unit (49) determines the drive position to be set in the splitter (17) and/or the target gear in the main transmission (18) and/or the drive position to be set in the range group (19) in such manner that at the speed of the motor vehicle at the time, a speed of the transmission input shaft (11) is within a specifiable speed range.

6. Method according to any of the preceding claims,
**characterised in that**
the control unit (49) sets a neutral position in the main transmission (18) during phases in which no drive power of the drive machine (14) is demanded.

7. Method according to any of the preceding claims,
**characterised in that**
During emergency operation of the drive machine (14), the speed of the drive machine (14) is kept constant.

8. Method according to Claim 7,
**characterised in that**
the said constant speed is between 1150 and 1250 R/min.

## Revendications

1. Procédé pour faire fonctionner une chaîne cinématique d'un véhicule automobile
- avec un moteur d'entraînement (14),
- avec une boîte de vitesses (10) actionnée par une force extérieure, laquelle présente une boîte de vitesses (18) principale non synchronisée et une unité (19) montée en aval synchronisée,
- un embrayage (12) actionné par une force extérieure disposé entre le moteur d'entraînement (14) et la boîte de vitesses (10) et
- un dispositif de commande (19) lequel commande le moteur d'entraînement (14), la boîte de vitesses (10) et l'embrayage (12),
dans un mode de fonctionnement normal du moteur d'entraînement (14) lors d'un passage d'un rapport initial à un rapport cible dans la boîte de vitesses (11) principale, une synchronisation d'un arbre d'entrée (11) de boîte de vitesses s'effectue jusqu'à la vitesse synchrone du rapport cible au moyen du moteur d'entraînement (14), **caractérisé en ce qu'**il comprend les étapes suivantes pour enclencher le rapport cible dans un mode de fonctionnement d'urgence du moteur d'entraînement (14) :
- ouvrir l'embrayage (12),
- régler une position neutre dans l'unité montée en aval (19),
- enclencher le rapport cible,
- régler une position de transmission dans l'unité montée en aval (19), et
- fermer au moins partiellement l'embrayage (12).

2. Procédé selon la revendication 1, **caractérisé en ce que** le dispositif de commande (49) détermine le rapport cible dans la boîte de vitesses (18) principale et la position de transmission devant être réglée dans l'unité montée en aval (19) en fonction d'une vitesse du véhicule automobile.

3. Procédé selon la revendication 1 ou 2, **caractérisé en ce que** le dispositif de commande (49) détermine le rapport cible dans la boîte de vitesses (18) principale et la position de transmission devant être réglée dans l'unité montée en aval (19) en fonction des propriétés de la chaussée.

4. Procédé selon la revendication 2 ou 3, **caractérisé en ce que**
- la boîte de vitesses (10) présente une unité montée en amont (17)
- le dispositif de commande (49) détermine une position de transmission devant être réglée dans l'unité montée en amont (17) en fonction de la vitesse du véhicule automobile et
- règle la position de transmission dans l'unité montée en amont (17) avant la fermeture de l'embrayage (12).

5. Procédé selon la revendication 2, 3 ou 4 **caractérisé en ce que** le dispositif de commande (49) détermine la position de transmission à introduire de l'unité montée en aval (17) et / ou le rapport cible dans la boîte de vitesses principale (18) et / ou la position de transmission à insérer dans l'unité montée en amont (19) de manière telle qu'à la vitesse actuelle du véhicule automobile une vitesse de rotation de l'arbre d'entrée de la boîte de vitesses (11) se situe dans une plage de vitesse de rotation pouvant être définie.

6. Procédé selon l'une quelconque des revendications précédentes, **caractérisé en ce que** le dispositif de commande (49) dans des phases dans lesquelles aucune puissance motrice du moteur d'entraînement (14) n'est nécessaire, règle une position neutre dans la boîte de vitesses (18).

7. Procédé selon l'une quelconque des revendications précédentes, **caractérisé en ce qu'**une vitesse constante du moteur d'entraînement (14) est réglée dans un mode de fonctionnement d'urgence du moteur d'entraînement (14).

8. Procédé selon la revendication 7, **caractérisé en ce que** la vitesse de rotation s'élève entre 1150 et 1250 tr/min.
